# EUROPEAN PATENT SPECIFICATION

(11) **EP 2 885 633 B1**
(45) Date of publication and mention of the grant of the patent: **12.02.2020**
(21) Application number: 13753129.9
(22) Date of filing: 14.08.2013
(51) Int. Cl.: G01N 27/333, B01L 3/00

(54) **Method of measuring ion concentration of an analyte using a micro machined chip of an ion-selective sensor**
Verfahren zur Messung der Ionenkonzentration eines Analyten mit einem mikromechanischen Chip eines ionenselektiven Sensors
Méthode de mesure de la concentration en ions d'un analyte avec une puce micromécanique d'un capteur à sélection d'ions

(30) Priority: 16.08.2012 US 201261683852 P
(43) Date of publication of application: 24.06.2015
(73) Proprietor: CSEM Centre Suisse d'Electronique et de Microtechnique SA - Recherche et Développement, 2002 Neuchâtel (CH)
(72) Inventor: GENERELLI, Silvia, 6600 Locarno (CH); BARBE, Laurent, 7205 Zizers (CH)
(74) Representative: P&TS SA (AG, Ltd.)
(86) International application number: PCT/EP2013/067045
(87) International publication number: WO 2014/027051

(56) References cited:
- WO-A1-2009/042921
- US-A1- 2003 112 013
- US-A1- 2004 028 566
- JANG A ET AL: "Potentiometric and voltammetric polymer lab chip sensors for determination of nitrate, pH and Cd(II) in water", TALANTA, ELSEVIER, AMSTERDAM, NL, vol. 83, no. 1, 15 November 2010 (2010-11-15), pages 1-8, XP027449720, ISSN: 0039-9140, DOI: 10.1016/J.TALANTA.2010.07.061 [retrieved on 2010-08-07]
- MASADOME T ET AL: "Polymer chip incorporated with anionic surfactant-ISFET for microflow analysis of anionic surfactants", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 108, no. 1-2, 22 July 2005 (2005-07-22), pages 888-892, XP027810714, ISSN: 0925-4005 [retrieved on 2005-07-22]

## Description

### Technical Field

The present invention relates to a method of measuring ion concentration of an analyte solution by using a micro machined chip for a low-cost disposable ion-selective sensor.

### Background of the invention

Potentiometric ion-selective sensors are extremely easy, label-free methods of measurement. The measurement of a potentiometric ion-selective sensor is based on the equilibrium of ions between the different phases of the sensor and at the sensor/analyte interface. This means that the different phases are potentially affected by the measurement, due to exchange of chemical species. These changes lead to a drift in the signal, and eventually to a degradation of the signal. This causes the need for frequent recalibration as well as a degradation of the sensor. Ion sensing is a routine technology in many analytical laboratories, which is used for timepoint measurements. In the past, measurements of ionic concentration were often made by ion-selective microsensors based on a glass micropipette, requiring special pipet fabrication equipments. These types of electrodes are thin and fragile and cannot withstand harsh environments. Also, most of the current miniaturized ion-selective devices on the market are not suited for long-term monitoring. In fact, miniaturized ion-selective electrodes have a limited lifetime, due to the degradation of the materials and/or of the interfaces geometry, which can partly be due to stagnating liquids at the level of the ion sensing membrane. This can lead to changes in the interfacial equilibrium of the ions.

Although, miniaturized ion-selective sensors are at this day available on the market, their use is mainly still limited to single-use sensors.

The ideal miniaturized sensor is an all-solid-state sensor. This means that the sensor is completely solid. The conventional ion-selective electrodes however have a liquid aqueous internal electrolyte. Although more rigid than conventional electrodes, coated wire electrodes and CHEMFETS have the membrane directly coated respectively onto a metal wire and the gate region of a solid-state field effect transistor.

The miniaturization has been performed by exchanging of the conventional aqueous phase with for example hydrogels, conductive polymers (Bobacka, Electroanalysis 18, 2006, No. 1, pp. 7-18), carbon nanotubes (G. Crespo, Anal. Chem., 2008, 80(4), pp. 1316-1322), but without reaching the stability of a conventional electrode.

In their article "Integrated potentiometric detector for use in chip-based flow cells", Anal. Chem. 2000, 72, pp. 2875-2878, R. Tantra and A. Manz disclose a new kind of potentiometric chip sensor for ion-selective sensors based on a solvent polymeric membrane. They propose a method based on a micro machined ion-selective sensor chip to overcome problems presented by surface effects occurring in coated wire electrodes and also by CHEMFETS. The proposed micro machined ion-selective sensor chip by R. Tantra and A. Manz comprises a micro channel for the analyte solution and a micro channel junction structure containing a liquid membrane that separates the analyte from the electrolyte solution. The solution proposed by R. Tantra and A. Manz still requires an electrode reservoir and a conventional Ag/AgCl electrode, which may lead to long-term drift problems due to the stagnating electrode volume. The proposed solution is not fully integrated in a microchip, so that the proposed method is still semi-standard and thus difficult to industrialize. The fact that the solution proposed in A. Manz is not fully integrated in a microchip limits as well the possibility of integration of multiple sensors on a single device.

Another example for a microfluidic ion-selective sensor is US 2003/0112013 A1 where an inert, porous supporting material can be stored in a chamber where the ion-selective membrane is contained in. This can be a ceramic, which is provided to support the ion-selective membrane to improve the mechanic stability of the membrane.

### Summary of the invention

The invention intends to solve the limitations of ion-selective sensors of prior art and relates more precisely to a method of measuring ion concentration of an analyte solution by using a micro machined chip for an ion-selective sensor in which three micro channels are
micro machined:
- an analyte micro channel, adapted to draw an analyte solution;
- an electrolyte micro channel, adapted to draw an electrolyte solution; and
- a liquid membrane micro channel adapted to draw an ion-selective liquid membrane solution.

The micro machined chip for the ion-selective sensor comprises further at least two substrates:
- a first substrate that comprises a first electrolyte micro channel integrated on one of its surfaces, this first surface also comprising at least one metal strip layer, said metal strip comprising at least two portions, of which a first portion is deposited on said first substrate and of which a second portion is deposited in the first electrolyte micro channel, said first and second portions being connected electrically; and
- a second substrate comprising, on one of its surfaces and arranged opposite to said surface of the first substrate, the analyte micro channel and the first liquid membrane micro channel.

Said analyte micro channel and said liquid membrane micro channel and said electrolyte micro channel are structured so as to provide, at each of their extremities, an opening intended for an inlet and outlet of their respective liquid solution.

The micro machined chip is further characterised in that the assembly of said first and said second substrates closes said analyte micro channel, said first electrolyte micro channel and said first liquid membrane micro channel, and is further also characterised in that a first reservoir is formed, after said assembly, at the interface between the analyte micro channel and the electrolyte micro channel, said first reservoir being connected to said analyte micro channel, to the first electrolyte micro channel and to the first liquid membrane micro channel and is intended to receive and retain an ion-selective liquid membrane able to separate the analyte and electrolyte liquids drawn in their respective micro channels. The realisation of a confluent reservoir, interconnecting micro channels for the analyte solution, the electrolyte solution and the liquid membrane solution allows to achieve a fully integrated ion-sensor on a microchip, leading to a lower cost and also having the property of a long-term stability, which are two of the limitations of the devices taught in prior art. The ion-selective sensor has the additional advantage to be stored in a dry environment so that the liquid membrane and the electrolyte solution can be introduced in said sensor just before the ion concentration measurement of the analyte solution. Moreover, the possibility to introduce the liquid membrane immediately before the use of the sensor avoids possible problems coming from the aging of the liquid membrane due to the storage time of the sensor assembly, as well as disruptive phenomena that could be generated by the too long contact between the sensor assembly and the plasticizer-based liquid membrane.

According to the Invention a porous layer is arranged in said reservoir. The porous layer may be, preliminary to the assembly of the first substrate and the second substrate, arranged into one of the mentioned recesses The advantage of using a porous layer is that the porous layer may be soaked with ion-selective liquid membrane solution prior to the assembly of first substrate and second substrate. This results in an improved stability of the liquid membrane and a better reliability of the separation of the analyte solution and the electrolyte solution.

The liquid membrane micro channel and/or the analyte micro channel and/or the electrolyte micro channel may be realised by two portions, one portion being structured on the first substrate and a second portion on the second substrate.

The first reservoir can be realised by arranging a first recess only in the first substrate. Alternatively the first reservoir may be realised by arranging a second recess arranged in said second substrate, said recess forming the reservoir after assembly of the first and second substrates.

The first reservoir may also be realised by the alignment, and subsequent assembly of the two substrates comprising a first recess arranged in said first substrate and a second recess arranged in said second substrate, said second recess being arranged opposite to said first recess when the substrates are assembled.

Different examples of the ion-selective sensor may be devised wherein said first electrolyte micro channel, the first liquid membrane micro channel and the analyte micro channel are connected to the said first reservoir, and arranged with any relative angle between each of said first electrolyte, first liquid membrane and analyte micro channels. This design flexibility allows arranging the micro channel configuration to the specific application and use of the ion-selective sensor.

The substrates of the micro machined chip of of the ion-selective sensor may be made in any structural material, preferably a polymeric material. This allows achieving a low cost for the ion -selective sensor.

An arrangement not belonging to the invention is also attained by an ion-selective device comprising a first and a second ion-selective sensors. To achieve this, a second ion-selective sensor is arranged to the analyte micro channel of the first ion-selective sensor, this second ion-selective sensor comprising a second reservoir, different from the first reservoir and arranged separated from the said first reservoir. In this embodiment different variants of the liquid membrane micro channel are possible: a single liquid membrane micro channel may be connected to each of the two reservoirs or each reservoir may be connected to a different liquid membrane micro channel, each drawing a separate and possibly different ion-selective liquid solution. The two electrolyte micro channels of the ion-selective device may be identical or they may be different and they may draw the same or different electrolyte solutions.

An arrangement not belonging to the invention is also attained by an ion-selective system comprising a plurality of ion-sensors and/or ion-selective devices arranged on a single analyte micro channel, which can be a straight channel, but also a curved channel, and to which the electrolyte and the liquid membrane micro channels of each of said plurality of ion-sensors are arranged to form any angle with the single analyte micro channel. The advantage of arranging different ion-sensors and/or ion-selective devices on a single analyte micro channel is that more than two ion species can be detected in a single analyte solution.

Furthermore, such an arrangement of the ion-selective system allows for a high integration density of such an ion-selective sensor. The plurality of ion-sensors may each be arranged with a porous layer arranged in their respective reservoirs, but not all of said plurality of ion sensors does necessarily have a porous layer arranged in their corresponding reservoir.

In an example of the method not beloning to the invention comprising an ion-selective sensor comprising a reservoir as defined above the following steps are taken:
- providing the ion-selective sensor comprising a reservoir, as described above;
- treating the surface of the reservoir to protect the first substrate and the second substrate from the interaction with the liquid membrane solution;
- treating the surface of the reservoir to become hydrophobic;
- adding the liquid membrane to the inlet of the liquid membrane micro channel and letting it enter in the reservoir by capillarity;
- letting the liquid membrane stabilize and/or gelify;
- pumping the electrolyte solution in the electrolyte micro channel;
- pumping in the analyte micro channel a pre-conditioning solution;
- waiting until the three liquid phases, i.e. the analyte solution, the liquid membrane and the electrolyte solution equilibrate;
- before starting the measurements, renew the analyte micro channel solution and the internal electrolyte solution by pumping fresh solution in the analyte micro channel and the internal electrolyte channels;
- starting a calibration cycle by pumping one or more calibration solutions, comprising a precisely determined composition and ion concentrations of a specific ion species in the analyte micro channel;
- after the end of the calibration cycle, starting a rinsing cycle by pumping a rinsing solution in the analyte micro channel;
- pumping the analyte solution in the analyte channel and perform the ion concentration measurement of the analyte solution;
- repeating the measurement steps with other analyte solutions if needed; and
- after the end of the measurement cycle, starting a rinsing cycle by pumping a rinsing solution in the analyte micro channel.

In an example of the method not belongening to the invention of measuring ion concentration of an analyte solution, prior to the introduction of the liquid membrane solution in the liquid membrane micro channel and the reservoir, a gas is flown in the electrolyte micro channel and the analyte micro channel, this in order to keep in place the liquid membrane when introducing the analyte and electrolyte solution, and to avoid the mixing of the liquid membrane, the analyte solution and the electrolyte solution.

The method according to the invention of measuring ion concentration of an analyte solution comprises the steps of:
- providing the ion-selective sensor comprising a reservoir in which a porous layer is arranged, as described above;
   adding a liquid membrane to the inlet of the liquid membrane micro
- channel;
   letting the liquid membrane be transported, by capillarity, through the
- liquid membrane micro channel to the reservoir;
- letting the liquid membrane soak the porous layer;
- waiting for the liquid membrane to equilibrate within the porous layer;
- pumping the electrolyte solution in the electrolyte micro channel;
   pumping a pre-conditioning solution, which is typically an electrolyte solution of composition similar to the analyte solution of interest, in
- the analyte micro channel;
- waiting for the three liquid phases to equilibrate;
   before starting the measurements, renewing the analyte solution in the analyte micro channel and renewing the internal electrolyte solution in the electrolyte micro channel by pumping fresh solution in
- their respective channels;
   starting a calibration cycle by pumping one or more calibration solutions, comprising a precisely determined composition and ion
- concentrations of a specific ion species in the analyte micro channel; after the end of the calibration cycle, starting a rinsing cycle by
- pumping a rinsing solution in the analyte micro channel;
   pumping the analyte solution in the analyte channel and performing
- the ion concentration measurement of the analyte solution;
   repeating the measurement steps with other analyte solutions if
- needed; and
   after the end of the measurement cycle, starting a rinsing cycle by pumping a rinsing solution in the analyte micro channel.

### Brief description of the drawings

The natural advantages and various additional features of the invention will appear more fully upon consideration of the illustrative embodiments in the accompanying drawings:
- fig.1, which is an example not belonging to the invention, illustrates a top view of the reservoir to which the liquid membrane micro channel, the analyte micro channel and electrolyte micro channel are connected;
- fig. 2, which is an example not belonging to the invention, illustrates a top view of another arrangement of a reservoir to which the liquid membrane micro channel, the analyte micro channel and electrolyte micro channel are connected;
- fig. 3a, which is an example not belonging to the invention, illustrates a cross-section of the reservoir to which the liquid membrane micro channel, the analyte micro channel and electrolyte micro channel are connected;
- fig. 3b, which is an example not belonging to the invention, illustrates another cross-section of the reservoir to which the liquid membrane micro channel, the analyte micro channel and electrolyte micro channel are connected;
- fig. 3c, which is an example not belonging to the invention, illustrates a cross-section of a liquid membrane micro channel realized by the assembly of a first substrate comprising a recess and a second substrate comprising also a recess;
- fig. 3d, which is an example not belonging to the invention, illustrates a cross section of a reservoir, along the liquid membrane micro channel filled with a liquid membrane solution;
- fig.4 illustrates a top view of the microfluidic chip comprising a porous layer arranged in the reservoir connecting the liquid membrane micro channel, the analyte micro channel and the electrolyte micro channel;
- fig. 5a illustrates a cross-section of the junction of the liquid membrane-, the electrolyte- and the analyte micro channels to a reservoir in which a porous layer is arranged;
- fig. 5b illustrates another cross-section of the junction of the liquid membrane micro channel, the electrolyte micro channel and the analyte micro channels to a reservoir in which a porous layer is arranged;
- fig. 6 illustrates a cross-section of the microfluidic chip, comprising a porous layer, along the analyte micro channel;
- fig. 7 illustrates a cross-section of the microfluidic chip comprising a porous layer, along the electrolyte micro channel;
- fig. 8 illustrates a cross-section of the microfluidic chip comprising a porous layer, along the liquid membrane micro channel;
- fig. 9, which is an example for executing the method of the invention, illustrates an arrangement of a liquid membrane micro channel, an analyte micro channel and an electrolyte micro channel comprising a porous layer separating the analyte solution and the electrolyte solution;
- fig. 10, which is an example for executing the method of the invention, illustrates a detailed view of an arrangement of a junction of a liquid membrane micro channel, an analyte micro channel and a electrolyte micro channel comprising a porous layer separating the analyte solution and the electrolyte solution; and
- fig. 11, which is an example for executing the method of the invention, illustrates an ion-selective device comprising two ion-selective sensors connected to the same analyte micro channel.

### Detailed description

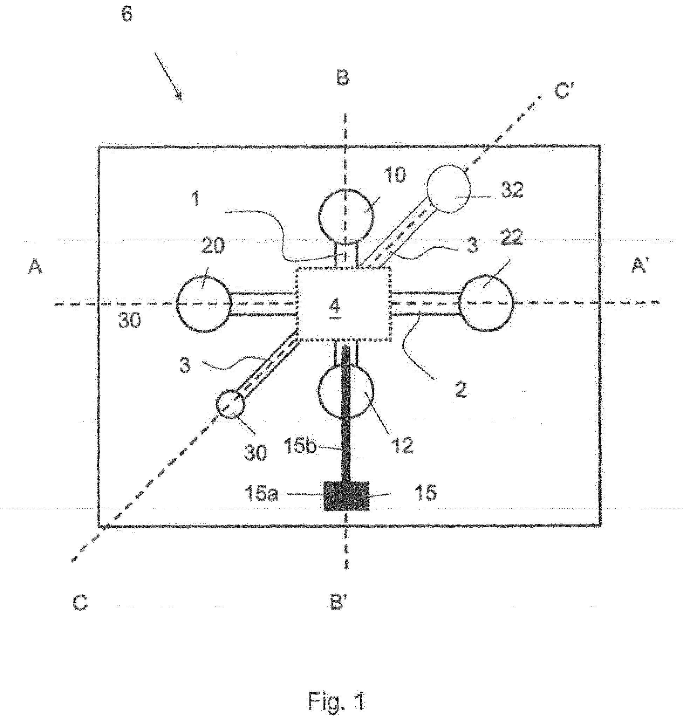

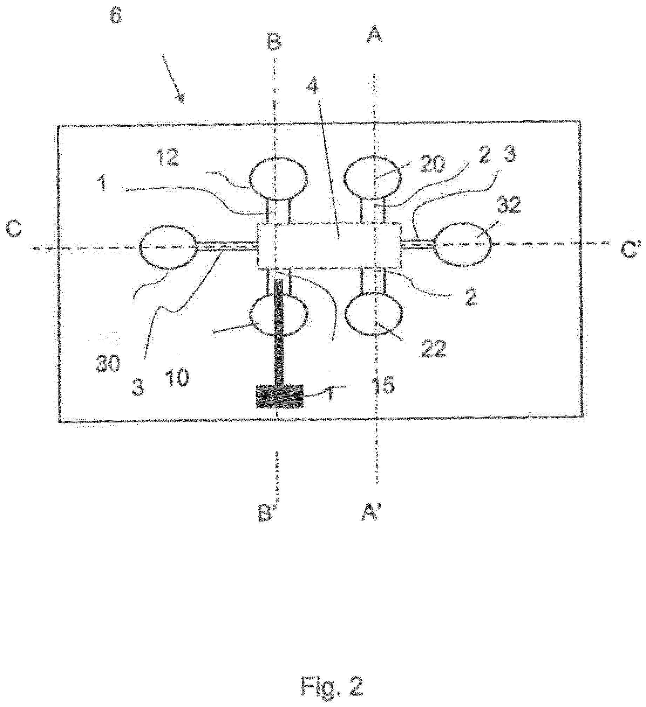

According to an example not belonging to the invention, illustrated in fig. 1, fig. 2 and fig. 3a, an ion-selective sensor 6 comprises three microfluidic micro channels, arranged inside the ion-selective sensor 6:
- an analyte micro channel 2, arranged to draw an analyte solution;
- a first liquid membrane micro channel 3 arranged to draw an ion-selective liquid membrane solution; and
- a first electrolyte micro channel 1, arranged to draw an electrolyte solution.

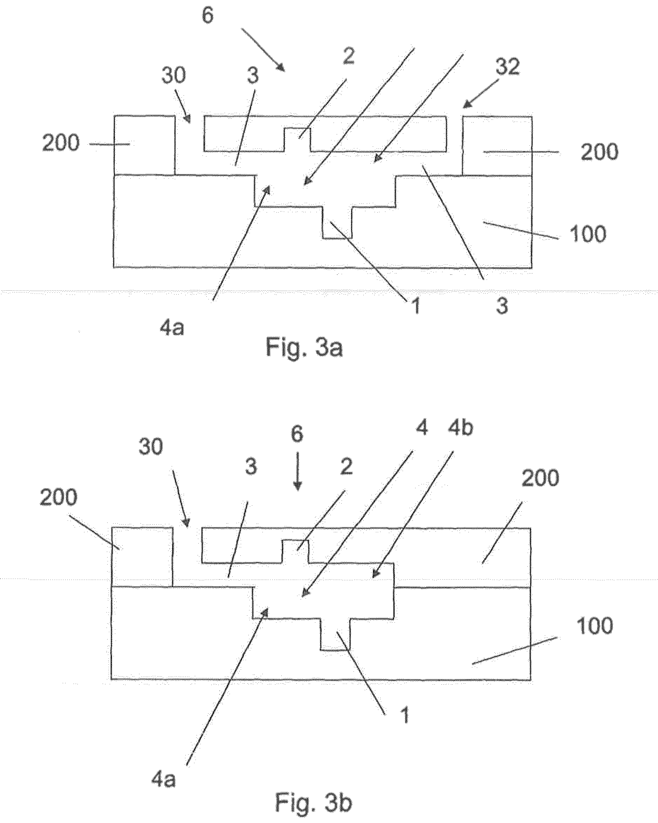

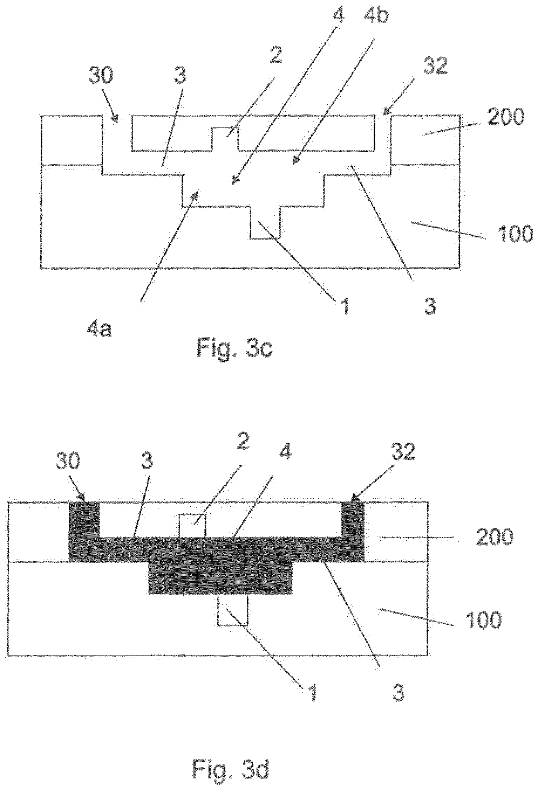

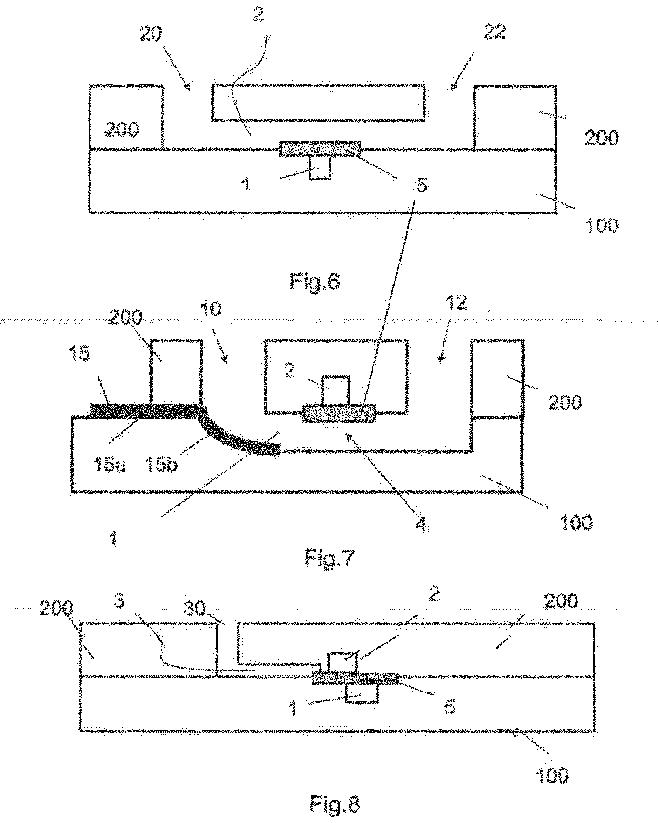

The ion-selective sensor 6 further comprises:
- a first substrate 100 comprising the first electrolyte micro channel 1 integrated on one of the surfaces of said first substrate 100;
- at least one metal strip layer 15, as shown in fig. 8, that comprises at least two portions 15a and 15b, of which a first portion 15a is deposited on said first substrate 100 and a second portion 15b is deposited on the surface of the first electrolyte micro channel 1, said portions being connected electrically;
- a second substrate 200 that comprises, on one of its surfaces, arranged opposite to said surface of the first substrate 100, said analyte micro channel 2 and said first liquid membrane micro channel 3. The analyte micro channel 2 and the first liquid membrane micro channel 3 are structured at their extremities, as illustrated in the top view of fig. 1 and in the cross-section view of fig. 3a, to present openings intended for their respective inlets 20, 30 and respective outlets 22, 32. The cross-section view of fig. 3a corresponds to the cross-section according to the section C-C' of the top view in fig.1.

The ion-selective sensor 6 comprises, after the assembly of said first substrate 100 and said second substrate 200, a completely formed analyte micro channel 2, a completely formed first electrolyte micro channel 1, and a completely formed first liquid membrane 3 micro channels.

The ion selective sensor 6 has also a first reservoir 4, arranged at the interface of the first substrate 100 and the second substrate 200 and forming a chamber to which the liquid membrane micro channel 3, the analyte micro channel 2, the electrolyte micro channel 1 are connected and which is intended to receive the ion-selective liquid membrane solution, the analyte solution and the electrolyte solution, by means of their respective micro channels connected to that reservoir 4.

In order to assure that the analyte solution and the electrolyte solution can remain separated by the ion-selective liquid membrane solution in that reservoir, different structural embodiments and liquid introduction methods have been devised and will be explained further in more detail.

The electrochemical properties and mechanism of an ion-selective liquid membrane are well known to a person skilled in the art. The ion-selective liquid membrane is herein also called the liquid membrane. The liquid membrane has an advantageously chosen chemical composition and property for a specific ion-selective electrode, so that the analyte solution and electrolyte solution can be separated by said liquid membrane. Its properties are based on the use of ionophores and lipophilic substances that do not diffuse out of the liquid membrane. The ionophore in the liquid membrane allows the analyte ion to solubilize in the liquid membrane and an equilibrium of the analyte ion needs to be achieved at the interface of the analyte and the liquid membrane.

A great variety of compositions of liquid membranes can be used and are chosen in function of the analyte solution, the electrolyte solution, the desired surface tension properties of the deployed solutions and also the flow properties of said liquid membrane.

Fig. 3d illustrates a cross-section of the reservoir 4 of the liquid membrane micro channel 3, the electrolyte micro channel 2 and the analyte micro channel 1, with an ion-selective liquid membrane solution drawn through said reservoir 4. This may be achieved, for example, as further described in the method of the invention, by introducing a gas into each of the analyte micro channel and the electrolyte micro channel, or also by using capillary effects. In fig. 3a-d the geometry of the reservoir 4 is not drawn to scale and different configurations and geometries of the reservoir 4 may be devised. The cross-sections of fig. 3a-d all represent a section according to the line C-C' of fig. 1.

Typical widths of the analyte micro channel 2, the electrolyte micro channel 1 are between 10 µm and 1 mm, preferably 500 µm. Typical widths of the liquid micro channel are between 10 µm and 500 µm, preferably 100 µm. Typical lengths of the micro channels are between 1 mm and 20 mm, preferably 15 mm. Typical dimensions (i.e. width, length and height) of the reservoir are between 10 µm x10 µm x10 µm and 1000 µm x1000 µm x100 µm, preferably 500 µm x500 µm x20 µm.

The materials used for the first substrate 100 and the second substrate 200 are preferably chosen among thermoplastic materials. Other materials that can be microstructured by etching or laser techniques may be devised as well. Said substrates may be microstructured with micromechanical techniques, or by chemical etching techniques, or by laser machining techniques, or by hot embossing techniques, or by injection moulding techniques, or by lamination techniques or any combination thereof.

In an example not belonging to the invention, illustrated in fig. 3d, the first liquid membrane micro channel 3 can be realised by structuring, before assembly of said first substrate 100 and said second substrate 200, a first portion 3a of the first liquid membrane micro channel 3 on said first substrate 100 and a second portion 3b of the first liquid membrane micro channel 3 on said second substrate 200, said first liquid membrane micro channel 3 being formed completely after the alignment and assembly of the first substrate 100 and the second substrate 200.

The liquid membrane micro channel 3 may present only an inlet 30 and no outlet, as shown in fig. 3b.

The analyte micro channel 2, the electrolyte micro channel 1 and the liquid membrane micro channel 3 may be straight micro channels. Alternatively the analyte-2, electrolyte-1 and liquid membrane 3 micro channels may be curved micro channels. The widths and depths of the micro channels may be constant or may vary along their length.

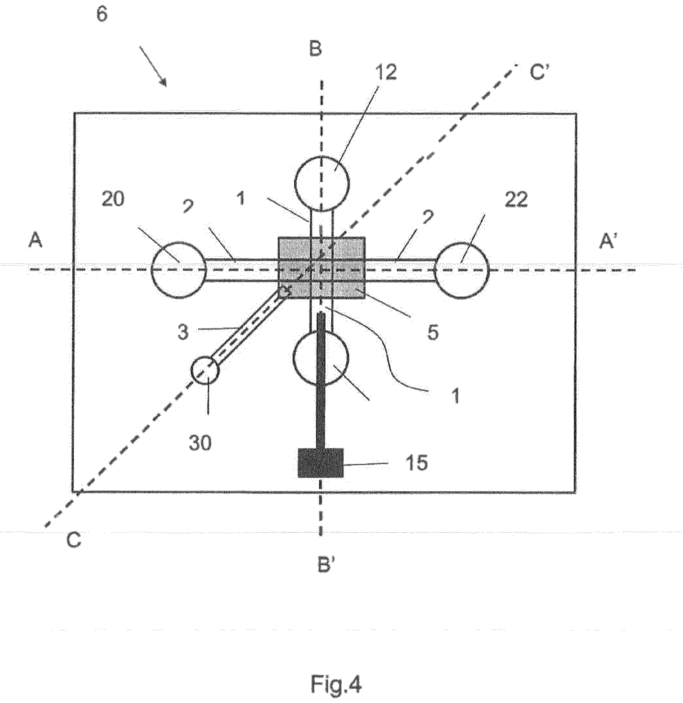

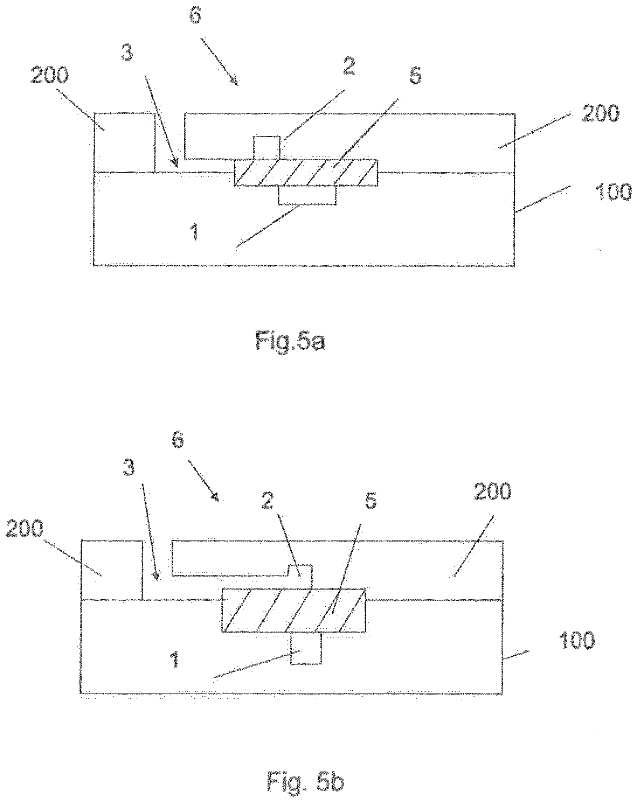

According to the invention, illustrated in figs. 4-10 a porous layer 5 is arranged inside the reservoir 4 of the ion-selective sensor 6. Figs 6, 7 and 8 show the cross-section of such an ion-selective sensor 6 comprising a porous layer 5. Fig. 6 corresponds to the cross-section of fig. 4 according to the line A-A', fig. 7 corresponds to the cross-section of fig.4 according to the line B-B' and fig.8 corresponds to the cross-section of fig.4 according to the line C-C'. Said porous layer 5 may be arranged in said recess 4a of the first substrate 100 before assembly with the second substrate 200. As an alternative arrangement the porous layer 5 may be arranged to a recess 4b of the second substrate 200 before said assembly. Depending on the desired configuration and geometry of said reservoir 4 the thickness of the porous layer 5 may be smaller or equal to the depth of said recesses.

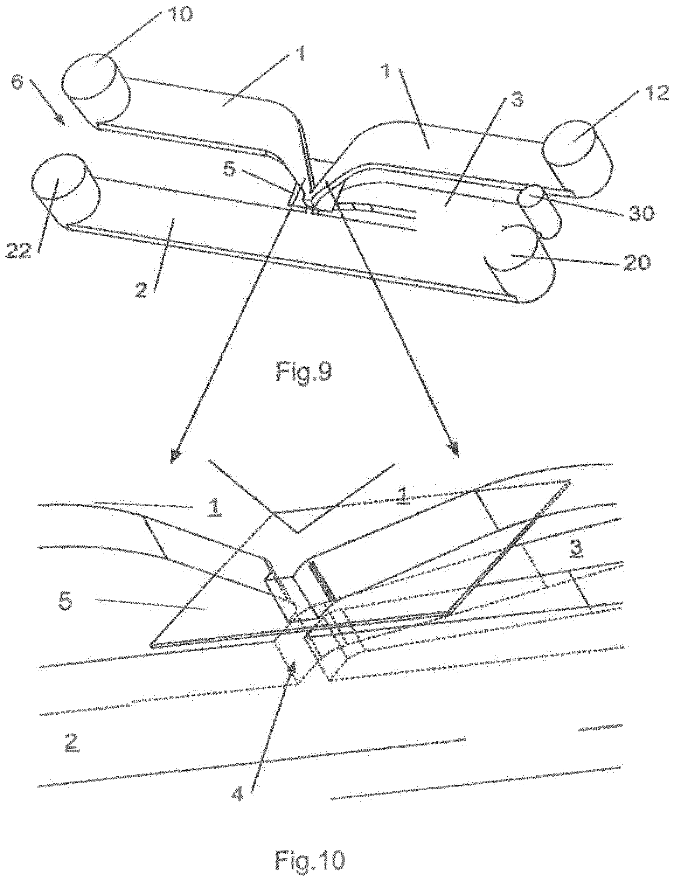

There are different possible arrangements of the micro channels 1, 2, 3 and said reservoir 4 to which the micro channels 1, 2, 3 are connected and confluent. In fig. 9 and fig. 10, a 3D view of an embodiment is shown wherein the first liquid membrane micro channel 3 is connected to the porous layer 5 arranged in the reservoir 4, allowing to soak said porous layer 5 with the liquid membrane solution provided by the liquid membrane micro channel 3. As explained further in the method according to the invention, the analyte and electrolyte solutions are brought into contact with the liquid membrane located in reservoir 4 after the stabilisation of the liquid membrane and said analyte and electrolyte solutions stay separated by the porous layer soaked with said liquid membrane solution.

The materials for the porous layer 5 are preferably chosen among plastic porous materials.

Different assembly methods are possible to arrange said porous layer 5 into the reservoir 4. These are standard assembly techniques and will not be further explained in detail.

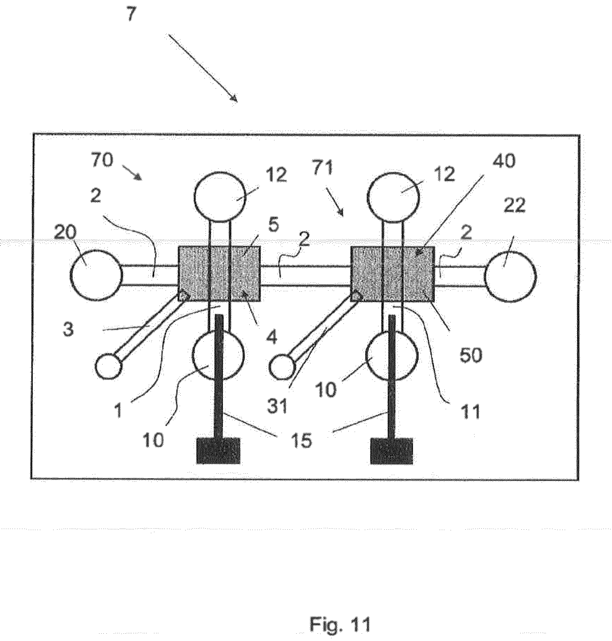

In an ion-sensor device 7, two ion-sensors may be arranged to the analyte micro channel 2, as illustrated in fig. 11. In the ion-sensor device of fig. 11 the two electrolyte micro channels 1, 11 may have the same geometry or they may have a different geometry. They may also draw the same electrolyte solution or a different electrolyte solution. In the ion-sensor device of fig. 11 the two liquid membrane micro channels 3, 31 may have the same geometry or they may have a different geometry. They may also draw the same liquid membrane solution or a different liquid membrane solution. The two porous layers 5, 50 arranged into the two reservoirs 4, 40 may have the same geometry or they may have a different geometry and the materials used for the tow porous layers 5, 50 may be different.

An example of a system for executing the method of the invention, relates also to an ion-sensor system, differing from the ion-sensor device 7 of fig. 11, in that more than 2 ion-sensors are arranged to the same analyte micro channel 2. The analyte micro channel 2 must not be necessarily a straight micro channel and may be arranged as a curve on the surface of said second substrate 200.

A method to measure ion concentration of an analyte solution by the ion-selective sensor 6 of the invention will now be described in more detail.

In an example not belonging to the invention of a method to measure ion concentration of an analyte solution by an ion-selective sensor comprising a reservoir 4 as defined above, the following steps are taken:
- the ion-selective sensor 6 comprising a reservoir 4, as described above, is provided;
- the surface of the reservoir 4 is treated to protect the first substrate 100 and the second substrate 200 from the interaction with the liquid membrane solution; by for example coating the micro channels walls with a glass-like material (e.g. by sol-gel treatment);
- the surface of the reservoir 4 is then treated to become hydrophobic; a possibility is to treat the oxide-based coating with a silanizing agent;
- the liquid membrane is added to the inlet of the liquid membrane micro channel 3 and it is introduced in the reservoir 4 by capillarity. Letting the liquid membrane stabilize and/or gelify; typically for 15 to 24 hours. If the liquid membrane has been added with solvents, this time is necessary for the solvent to evaporate;
- pumping the electrolyte solution in the electrolyte micro channel 1;
- pumping in the analyte micro channel 2 a pre-conditioning solution;
- waiting for the three liquid phases, i.e. the analyte solution, the liquid membrane and the electrolyte solution to equilibrate, typically for 24 hours. The equilibration time is needed for the liquid membrane to hydrate and for the ion equilibrium at the interfaces to be achieved;
- before starting the measurements, the analyte micro channel solution and the internal electrolyte solution are renewed by pumping a fresh solution in the analyte micro channel 2 and the electrolyte channel 1;
- starting a calibration cycle by pumping one or more calibration solutions, comprising a precisely determined composition and ion concentrations of a specific ion species in the analyte micro channel 2;
- after the end of the calibration cycle, starting a rinsing cycle by pumping a rinsing solution in the analyte micro channel 2;
- pumping the analyte solution in the analyte micro channel 2 and perform the ion concentration measurement of the analyte solution;
- repeating the measurement steps with other analyte solutions if needed; and
- eventually, after the end of the measurement cycle, starting a rinsing cycle by pumping a rinsing solution in the analyte micro channel 2.

In an example not belonging to the invention of measuring ion concentration of an analyte solution as described above, a gas is flown in the electrolyte micro channel 1 and the analyte micro channel 3, prior to the introduction of the liquid membrane solution in the liquid membrane micro channel 3 and the reservoir 4, this in order to keep in place the liquid membrane when introducing the analyte and electrolyte solution, and to avoid the mixing of the liquid membrane, the analyte solution and the electrolyte solution.

According to the invention of the method of measuring ion concentration of an analyte solution by a micro machined chip for an ion-selective sensor 6 comprising a reservoir 4 comprising a porous layer 5, the following steps are taken:
- providing the chip according to claim 1 comprising a reservoir 4 in which a porous layer 5 is arranged, as described above;
- adding a liquid membrane to the inlet 30 of the liquid membrane micro channel 3, let the liquid membrane be transported by capillarity through the liquid membrane micro channel 3 to the reservoir 4;
- letting the liquid membrane soak the porous layer 5;
- waiting for the liquid membrane to equilibrate within the porous layer 5, typically for 15 to 24 hours, the liquid membrane being in most of the cases prepared with plasticizing agents, a certain time is needed to plasticize the porous plastic material and reach a stable layer;
- pumping the electrolyte solution in the electrolyte micro channel 1;
- pumping a pre-conditioning solution in the analyte micro channel 3;
- waiting until the three liquid phases of the analyte solution, the electrolyte solution and the liquid membrane solutions equilibrate for some hours, typically 12h;
- before starting the measurements, renewing the analyte solution in the analyte microchannel and renewing the internal electrolyte solution in the electrolyte micro channel 1 by pumping fresh solution in their respective channels;
- starting a calibration cycle by pumping one or more calibration solutions, comprising a precisely determined composition and ion concentrations of a specific ion species in the analyte micro channel 2;
- after the end of the calibration cycle, starting a rinsing cycle by pumping a rinsing solution in the analyte micro channel 2;
- pumping the analyte solution in the analyte channel and performing the ion concentration measurement of the analyte solution;
- repeating the measurement steps with other analyte solutions if needed; and
- after the end of the measurement cycle, starting a rinsing cycle by pumping a rinsing solution in the analyte micro channel 2.

Although the present invention has been described with reference to specific embodiments, variations thereto are possible without departing from the scope of the invention as described by the appended claims.

For example, the realisation of the micro channels and their inlets and outlets may be realised in different arrangements that the ones explained. The inlets and outlets may be formed by partially structuring two portions, one portion being structured in the first substrate 100 and the second portion being structured in the second substrate 200 and at the same time the corresponding micro channels may be structured in one or both of first 100 and second 200 substrate but always so that after assembly of the first 100 and second 200 substrate the micro channels comprise an inlet and an outlet.

Also, the person skilled in the art may devise embodiments wherein different ion-selective sensors, ion-selective devices or ion-selective systems are assembled on top of each other, possibly interconnected by advantageously chosen fluidic interconnections.

## Claims

1. A method of measuring ion concentration of an analyte solution comprising the step of:
- providing a micro machined chip comprising an analyte micro channel (2) adapted to draw an analyte solution, and a first liquid membrane micro channel (3) adapted to draw a liquid membrane solution, and a first electrolyte micro channel (1) adapted to draw an electrolyte solution, and said micro machined chip further comprises:
- a first substrate (100) comprising a first electrolyte micro channel (1) integrated on one of its surfaces, adapted to draw an electrolyte solution; the first electrolyte micro channel (1) being structured at its extremities to present an opening intended for an inlet (10) and a further opening intended for an outlet (12) of the electrolyte solution;
- at least one metal strip layer (15), comprising at least two portions, of which a first portion (15a) is deposited on said first substrate (100) and a second portion (15b) is deposited in the first electrolyte micro channel (1), said portions being connected electrically;
- a second substrate (200) comprising on one of its surfaces, arranged opposite to said surface of the first substrate (100), said analyte micro channel (2), and said first liquid membrane micro channel (3), the analyte micro channel (2) being structured at its extremities to present an opening intended for an inlet (20) and a further opening intended for an outlet (22) of the analyte solution, and the first liquid membrane micro channel (3) being structured at its extremities to present an opening intended for an inlet (30) and a further opening intended for an outlet (32) of the liquid membrane;
said first substrate (100) and said second substrate (200) close said analyte micro channel (2), first electrolyte micro channel (1) and first liquid membrane micro channel (3), and a first reservoir (4) is formed, at the interface between the analyte micro channel (2) and the first electrolyte micro channel (1), said first reservoir (4) being connected to said analyte micro channel (2), the first electrolyte micro channel (1) and the first liquid membrane micro channel (3), said first reservoir (4) comprising a first porous layer (5) retaining a liquid membrane that separates the analyte solution and the electrolyte solution, said analyte solution and the electrolyte solution being drawn in their respective micro channel said method also comprising the steps of
- adding a liquid membrane to the inlet (30) of the first liquid membrane micro channel (3);
- letting the liquid membrane be transported, by capillarity through the first liquid membrane micro channel (3) to the reservoir (4);
- letting the liquid membrane soak the porous layer (5);
- waiting for the liquid membrane to equilibrate within the porous layer (5);
- pumping the electrolyte solution in the electrolyte micro channel (1);
- pumping a pre-conditioning solution in the analyte micro channel (2);
- waiting for the three liquid phases to equilibrate for some hours, typically overnight;
- before starting the measurements, renewing the analyte solution in the analyte micro channel and renewing the internal electrolyte solution in the first electrolyte micro channel (1) by pumping fresh solution in their respective channels;
- starting a calibration cycle by pumping one or more calibration solutions, comprising a precisely determined composition and ion concentrations of a specific ion species in the analyte micro channel (2);
- after the end of the calibration cycle, starting a rinsing cycle by pumping a rinsing solution in the analyte micro channel (2);
- pumping the analyte solution in the analyte channel and perform the ion concentration measurement of the analyte solution;
- repeating the measurement steps with other analyte solutions if needed;
- after the end of the measurement cycle, starting a rinsing cycle by pumping a rinsing solution in the analyte micro channel (2).

2. The method according to claim 1, wherein the first liquid membrane micro channel (3) and/or the analyte micro channel (2) comprises two portions, one portion being structured on the first substrate (100) and a second portion being structured on the second substrate (200).

3. The method according to claim 1, wherein said first reservoir (4) is a first recess (4a) arranged in said first substrate (100).

4. The method according to claim 1, wherein said first reservoir (4) is a second recess (4b) arranged in said second (200) substrate.

5. The method according to claim 1, wherein said first reservoir (4) comprises a first recess (4a) arranged in said first substrate (100) and comprises a second recess (4b) in said second substrate (200), said second recess (4b) being arranged opposite to said first recess (4a).

6. The method according to any one of claims 1 to 5 wherein said first electrolyte micro channel (1), said first liquid membrane micro channel (3) and said analyte micro channel (2) are connected to said first reservoir (4) and arranged with an angle between each of said first electrolyte micro channel (1), said first liquid membrane micro channel (3) and said analyte micro channel (2).

7. The method according to any one of claims 1-6, wherein the substrates are made in any structurable material, preferably a polymeric material.

## Patentansprüche

1. Verfahren zum Messen der lonenkonzentration einer Analytlösung, den folgenden Schritt umfassend:
- Bereitstellen eines mikromaschinell bearbeiteten Chips, umfassend einen Analyt-Mikrokanal (2), der dazu eingerichtet ist, eine Analytlösung anzusaugen, und einen ersten Flüssigmembran-Mikrokanal (3), der dazu eingerichtet ist, eine Flüssigmembranlösung anzusaugen, und einen ersten Elektrolyt-Mikrokanal (1), der dazu eingerichtet ist, eine Elektrolytlösung anzusaugen, wobei der mikromaschinell bearbeitete Chip ferner Folgendes umfasst:
- ein erstes Substrat (100), das einen ersten Elektrolyt-Mikrokanal (1) umfasst, der in eine seiner Oberflächen integriert ist, dazu eingerichtet, eine Elektrolytlösung anzusaugen; wobei der erste Elektrolyt-Mikrokanal (1) an seinen äußersten Enden derart strukturiert ist, dass er eine Öffnung präsentiert, die für einen Einlass (10) vorgesehen ist, und eine weitere Öffnung, die für einen Auslass (12) der Elektrolytlösung vorgesehen ist;
- mindestens eine Metallstreifenschicht (15), die mindestens zwei Abschnitte umfasst, von denen ein erster Abschnitt (15a) auf dem ersten Substrat (100) abgeschieden ist und ein zweiter Abschnitt (15b) in dem ersten Elektrolyt-Mikrokanal (1) abgeschieden ist, wobei die Abschnitte elektrisch verbunden sind;
- ein zweites Substrat (200), das auf einer seiner Oberflächen, gegenüber der Oberfläche des ersten Substrates (100) angeordnet, den Analyt-Mikrokanal (2) und den ersten Flüssigmembran-Mikrokanal (3) umfasst, wobei der Analyt-Mikrokanal (2) an seinen äußersten Enden derart strukturiert ist, dass er eine Öffnung präsentiert, die für einen Einlass (20) vorgesehen ist, und eine weitere Öffnung, die für einen Auslass (22) der Analytlösung vorgesehen ist, und der erste Flüssigmembran-Mikrokanal (3) an seinen äußersten Enden derart strukturiert ist, dass er eine Öffnung präsentiert, die für einen Einlass (30) vorgesehen ist, und eine weitere Öffnung, die für einen Auslass (32) der Flüssigmembran vorgesehen ist;
wobei das erste Substrat (100) und das zweite Substrat (200) den Analyt-Mikrokanal (2), den ersten Elektrolyt-Mikrokanal (1) und den ersten Flüssigmembran-Mikrokanal (3) verschließen und ein erstes Reservoir (4) an der Grenzfläche zwischen dem Analyt-Mikrokanal (2) und dem ersten Elektrolyt-Mikrokanal (1) gebildet ist, wobei das erste Reservoir (4) mit dem Analyt-Mikrokanal (2), dem ersten Elektrolyt-Mikrokanal (1) und dem ersten Flüssigmembran-Mikrokanal (3) verbunden ist, wobei das erste Reservoir (4) eine erste poröse Schicht (5) umfasst, die eine Flüssigmembran hält, die die Analytlösung und die Elektrolytlösung trennt, wobei die Analytlösung und die Elektrolytlösung in ihren jeweiligen Mikrokanal gesaugt werden, wobei das Verfahren außerdem die folgenden Schritte umfasst:
- Zugeben einer Flüssigmembran zu dem Einlass (30) des ersten Flüssigmembran-Mikrokanals (3);
- Zulassen, dass die Flüssigmembran mittels Kapillarwirkung durch den ersten Flüssigmembran-Mikrokanal (3) zu dem Reservoir (4) transportiert wird;
- Zulassen, dass die Flüssigmembran die poröse Schicht (5) durchtränkt;
- Warten, bis die Flüssigmembran innerhalb der porösen Schicht (5) ein Gleichgewicht erreicht;
- Pumpen der Elektrolytlösung in den Elektrolyt-Mikrokanal (1);
- Pumpen eine Vorkonditionierungslösung in den Analyt-Mikrokanal (2);
- Warten für einige Stunden, typischerweise über Nacht, bis die drei Flüssigphasen ein Gleichgewicht erreichen;
- vor dem Starten der Messungen Erneuern der Analytlösung in dem Analyt-Mikrokanal und Erneuern der internen Elektrolytlösung in dem ersten Elektrolyt-Mikrokanal (1) durch Pumpen frischer Lösung in ihre jeweiligen Kanäle;
- Starten eines Kalibrierungszyklus durch Pumpen einer oder mehrerer Kalibrierungslösungen, die eine genau bestimmte Zusammensetzung und lonenkonzentrationen einer spezifischen lonenspezies umfassen, in den Analyt-Mikrokanal (2);
- nach dem Ende des Kalibrierungszyklus Starten eines Spülzyklus durch Pumpen einer Spüllösung in den Analyt-Mikrokanal (2);
- Pumpen der Analytlösung in den Analyt-Kanal und Durchführen der lonenkonzentrationsmessung der Analytlösung;
- bei Bedarf Wiederholen der Messungsschritte mit anderen Analytlösungen;
- nach den Ende des Messungszyklus Starten eines Spülzyklus durch Pumpen einer Spüllösung in den Analyt-Mikrokanal (2).

2. Verfahren nach Anspruch 1, wobei der erste Flüssigmembran-Mikrokanal (3) und/oder der Analyt-Mikrokanal (2) zwei Abschnitte umfasst/umfassen, wobei ein Abschnitt auf dem ersten Substrat(100) strukturiert ist und ein zweiter Abschnitt auf dem zweiten Substrat (200) strukturiert ist.

3. Verfahren nach Anspruch 1, wobei das erste Reservoir (4) eine erste Aussparung (4a) ist, die in dem ersten Substrat (100) angeordnet ist.

4. Verfahren nach Anspruch 1, wobei das erste Reservoir (4) eine zweite Aussparung (4b) ist, die in dem zweiten Substrat (200) angeordnet ist.

5. Verfahren nach Anspruch 1, wobei das erste Reservoir (4) eine erste Aussparung (4a) umfasst, die in dem ersten Substrat (100) angeordnet ist, und eine zweite Aussparung (4b) in dem zweiten Substrat (200) umfasst, wobei die zweite Aussparung (4b) gegenüber der ersten Aussparung (4a) angeordnet ist.

6. Verfahren nach einem der Ansprüche 1 bis 5, wobei der erste Elektrolyt-Mikrokanal (1), der erste Flüssigmembran-Mikrokanal (3) und der Analyt-Mikrokanal (2) mit dem ersten Reservoir (4) verbunden sind und in einem Winkel zwischen jeweils dem ersten Elektrolyt-Mikrokanal (1), dem ersten Flüssigmembran-Mikrokanal (3) und dem Analyt-Mikrokanal (2) angeordnet sind.

7. Verfahren nach einem der Ansprüche 1 bis 6, wobei die Substrate aus einem beliebigen strukturierbaren Material hergestellt sind, vorzugsweise einem Polymermaterial.

## Revendications

1. Procédé de mesure d'une concentration ionique d'une solution d'analyte comprenant l'étape :
- fournir une puce micro-usinée comprenant un microcanal d'analyte (2) conçu pour aspirer une solution d'analyte, et un premier microcanal de membrane liquide (3) conçu pour aspirer une solution de membrane liquide, et un premier microcanal d'électrolyte (1) conçu pour aspirer une solution d' électrolyte, et ladite puce micro-usinée comprenant en outre :
- un premier substrat (100) comprenant un premier microcanal d'électrolyte (1) intégré sur l'une de ses surfaces, conçu pour aspirer une solution d'électrolyte; le premier microcanal d'électrolyte (1) étant structuré au niveau de ses extrémités pour présenter une ouverture destinée à un orifice d'admission (10) et une ouverture supplémentaire destinée à un orifice de sortie (12) de la solution d'électrolyte;
- au moins une couche de bande de métal (15), comprenant au moins deux parties, dont une première partie (15a) est déposée sur ledit premier substrat (100), et une seconde partie (15b) est déposée dans le premier microcanal d'électrolyte (1), lesdites parties étant raccordées électriquement;
- un second substrat (200) comprenant sur l'une de ses surfaces, agencés à l'opposé de ladite surface du premier substrat (100), ledit microcanal d'analyte (2) et ledit premier microcanal de membrane liquide (3), le microcanal d'analyte (2) étant structuré au niveau de ses extrémités pour présenter une ouverture destinée à un orifice d'admission (20) et une ouverture supplémentaire destinée à un orifice de sortie (22) de la solution d'analyte, et le premier microcanal de membrane liquide (3) étant structuré au niveau de ses extrémités pour présenter une ouverture destinée à un orifice d'admission (30) et une ouverture supplémentaire destinée à un orifice de sortie (32) de la membrane liquide ;
ledit premier substrat (100) et ledit second substrat (200) fermant ledit microcanal d'analyte (2), ledit premier microcanal d'électrolyte (1) et ledit premier microcanal de membrane liquide (3), et un premier réservoir (4) est formé, au niveau de l'interface entre le microcanal d'analyte (2) et le premier microcanal d'électrolyte (1), ledit premier réservoir (4) étant relié audit microcanal d'analyte (2), au premier microcanal d'électrolyte (1) et au premier microcanal de membrane liquide (3), ledit premier réservoir (4) comprenant une première couche poreuse (5) retenant une membrane liquide qui sépare la solution d'analyte et la solution d'électrolyte, ladite solution d'analyte et la solution d'électrolyte étant aspirées dans leur microcanal respectif, ledit procédé comprenant également les étapes de :
- ajouter une membrane liquide à l'orifice d'admission (30) du premier microcanal de membrane liquide (3) ;
- laisser la membrane liquide être transportée, par capillarité à travers le premier microcanal de membrane liquide (3) jusqu'au réservoir (4) ;
- laisser la membrane liquide imprégner la couche poreuse (5) ;
- attendre que la membrane liquide s'équilibre à l'intérieur de la couche poreuse (5) ;
- pomper la solution d'électrolyte dans le microcanal d'électrolyte (1) ;
- pomper une solution de préconditionnement dans le microcanal d'analyte (2) ;
- attendre que les trois phases liquides s'équilibrent pendant quelques heures, typiquement pendant la nuit;
- avant de commencer les mesures, renouveler la solution d'analyte dans le microcanal d'analyte et à renouveler la solution d'électrolyte interne dans le premier microcanal d'électrolyte (1) en pompant une solution fraîche dans leurs canaux respectifs;
- commencer un cycle d'étalonnage en pompant une ou plusieurs solutions d'étalonnage, comprenant une composition déterminée avec précision et des concentrations ioniques d'une espèce d'ions spécifique dans le microcanal d'analyte (2) ;
- après la fin du cycle d'étalonnage, commencer un cycle de rinçage en pompant une solution de rinçage dans le microcanal d'analyte (2) ;
- pomper la solution d'analyte dans le canal d'analyte et à effectuer la mesure de concentration ionique de la solution d'analyte ;
- répéter les étapes de mesure avec d'autres solutions d'analyte si nécessaire;
- après la fin du cycle de mesure, commencer un cycle de rinçage en pompant une solution de rinçage dans le microcanal d'analyte (2).

2. Procédé selon la revendication 1, dans lequel le premier microcanal de membrane liquide (3) et/ou le microcanal d'analyte (2) comprend deux parties, une partie étant structurée sur le premier substrat (100) et une seconde partie étant structurée sur le second substrat (200).

3. Procédé selon la revendication 1, dans lequel ledit premier réservoir (4) est un premier évidement (4a) agencé dans ledit premier substrat (100).

4. Procédé selon la revendication 1, dans lequel ledit premier réservoir (4) est un second évidement (4b) agencé dans ledit second (200) substrat.

5. Procédé selon la revendication 1, dans lequel ledit premier réservoir (4) comprend un premier évidement (4a) agencé dans ledit premier substrat (100) et comprend un second évidement (4b) dans ledit second substrat (200), ledit second évidement (4b) étant agencé à l'opposé dudit premier évidement (4a).

6. Procédé selon l'une quelconque des revendications 1 à 5, dans lequel ledit premier microcanal d'électrolyte (1), ledit premier microcanal de membrane liquide (3) et ledit microcanal d'analyte (2) sont reliés audit premier réservoir (4) et agencés avec un angle entre chacun dudit premier microcanal d'électrolyte (1), dudit premier microcanal de membrane liquide (3) et dudit microcanal d'analyte (2).

7. Procédé selon l'une quelconque des revendications 1 à 6, dans lequel les substrats sont réalisés dans n'importe quel matériau structurable, de préférence un matériau polymère.
